# EUROPEAN PATENT SPECIFICATION

(11) **EP 1 500 560 B1**
(45) Date of publication and mention of the grant of the patent: **26.04.2006**
(21) Application number: 04025662.0
(22) Date of filing: 17.07.2002
(51) Int. Cl.: B60R 21/16

(54) **Airbag with three compartments**
Airbag mit drei Kammern
Airbag avec trois compartiments

(30) Priority: 24.07.2001 JP 2001223339
(43) Date of publication of application: 26.01.2005
(62) Divisional of application: 02015666.7
(73) Proprietor: TAKATA CORPORATION, Minato-ku, Tokyo 106-8510 (JP)
(72) Inventor: Abe, Kazuhiro, Tokyo 106-8510 (JP); Gu, Weixin c/o Takata Corporation, Minato-ku, Tokyo 106-8510 (JP)
(74) Representative: Banzer, Hans-Jörg

(56) References cited:
- EP-A- 0 657 329
- WO-A-00/03898
- WO-A-00/71389
- WO-A-99/52744
- US-B1- 6 224 101

## Description

### [Technical Field of the Invention]

The present invention relates to airbags for protecting a passenger in an emergency such as a car crash, and more specifically, it relates to an airbag which is suitable as a driver-side airbag installed in a steering device.

### [Description of the Related Art]

In many available drive-side airbag apparatuses, an airbag folded and housed in a retainer is covered by a cover member, i.e., a so-called module cover.

When a sensor detects a car crash, an inflator is activated, allowing gas (inflation gas) generated by the inflator to expand the airbag.

Japanese Unexamined Patent Application Publication Nos. 1-247242 and 5-155300 disclose drive-side airbags having two compartments which consist of a central compartment and a peripheral compartment and which are formed by partitioning the inside of the airbag with a partitioning panel, wherein the central compartment inflates first and then the peripheral compartment inflates. The partitioning panel has through ports for allowing gas to flow out. The partitioning panel connects the rear and the front of the airbag for preventing the airbag from protruding forward when inflated.

In US-B-6 224 101 an airbag according to the preamble of claim 1 is disclosed.

### [Problems to be Solved by the Invention]

Since the above-described airbag having two compartments has a relatively large volume, the inflator (the gas generator) is required to have a large capacity for inflating the peripheral compartment of the airbag substantially early, resulting in poor effective utilization of the gas.

The object of the present invention is to provide an airbag which improves the effective utilization of the gas compared to the conventional airbags and which protects a passenger, even when the inflator has a small capacity.

### [Means for Solving the Problems]

This object is achieved by an airbag as defined in claim 1. The dependent claims define preferred and advantageous embodiments of the invention.

The airbag, which has an opening at the rear thereof for supplying gas and which faces a passenger when inflated, comprises at least three compartments which comprise a first compartment, a second compartment adjacent to the first compartment, and a third compartment adjacent to the second compartment and which are formed by partitioning the inside of the airbag, wherein the gas from the first compartment flows into the third compartment via the second compartment.

In such an airbag, the gas is supplied from the opening, or from an inflator inserted into the opening, into the airbag for inflating the airbag. The gas first inflates the first compartment, then the second compartment, and subsequently the third compartment. Accordingly, the gas is held in the airbag longer than in conventional airbags, resulting in improved effective utilization of the gas.

In this airbag, the inside of the airbag is partitioned into at least three compartments, and the first, second, and third compartments are inflated in that order, thereby allowing the first compartment to inflate early and the second compartment to inflate relatively early. With this arrangement, a part of the airbag occupied by the first and second compartments inflates at a relatively early stage after the inflator is activated, thereby allowing a large part of the airbag to inflate early.

In the airbag according to the present invention, the first compartment is disposed only along the rear part of the airbag and the second and third compartments are disposed in front of the first compartment. With this configuration, the airbag inflates sideward on a large scale at an early stage after the inflator is activated, and then inflates toward a passenger.

The second compartment is disposed in the central part of the airbag, and the third compartment is disposed so as to encircle the outer periphery of the second compartment. The first and second compartments inflate relatively early.

The airbag according to the present invention may further comprise at least one through port for allowing the first and third compartments to communicate with each other. This configuration allows the third compartment to inflate early.

The airbag according to the present invention may further comprise at least one vent hole, wherein the last one of the compartments into which the gas flows last communicates with the outside of the airbag through the vent hole. This vent hole absorbs a shock when a passenger crashes into the airbag. Furthermore, it is within the assumption of the present invention that the passenger may crash into the airbag before the last compartment is full inflated. In such a case, since a shock can be absorbed by discharging the gas from the second compartment to the third compartment, the airbag without a vent hole can sufficiently absorb a shock.

### [Brief Description of the Drawings]

Fig. 1(a) is a longitudinal sectional view of an inflated airbag according to an embodiment, and Fig. 1(b) is a sectional view taken along the line B-B indicated in Fig. 1(a).
Fig. 2(a) is an exploded view of the airbag, and Figs. 2(b) and 2(c) are sectional views of the same.
Fig. 3 is a sectional view of another airbag according to another embodiment.
Fig. 4 is a sectional view of another airbag according to still another embodiment.
Fig. 5 is a sectional view of another airbag according to yet another embodiment and as defined by claim 1.
Fig. 6 is a sectional view of another airbag according to another embodiment.

### [Description of the Embodiments]

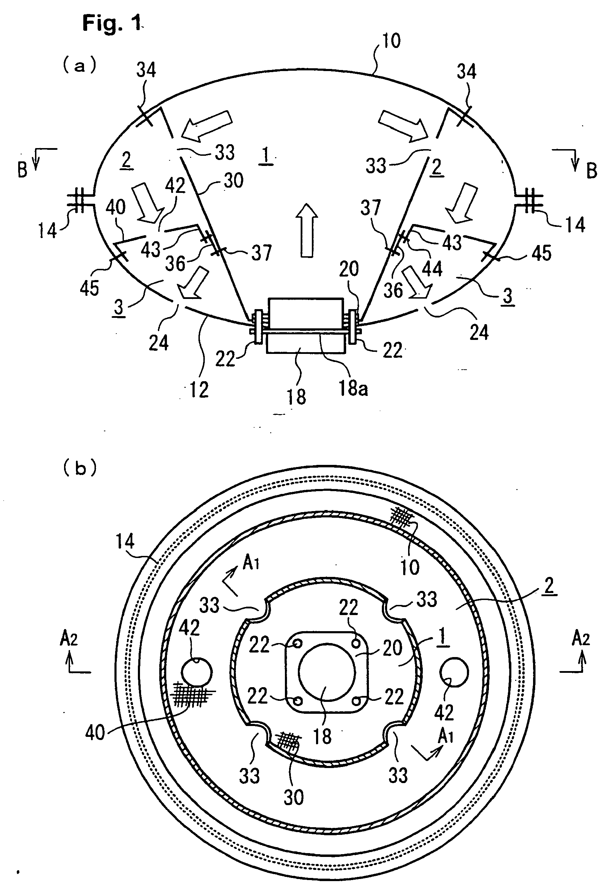

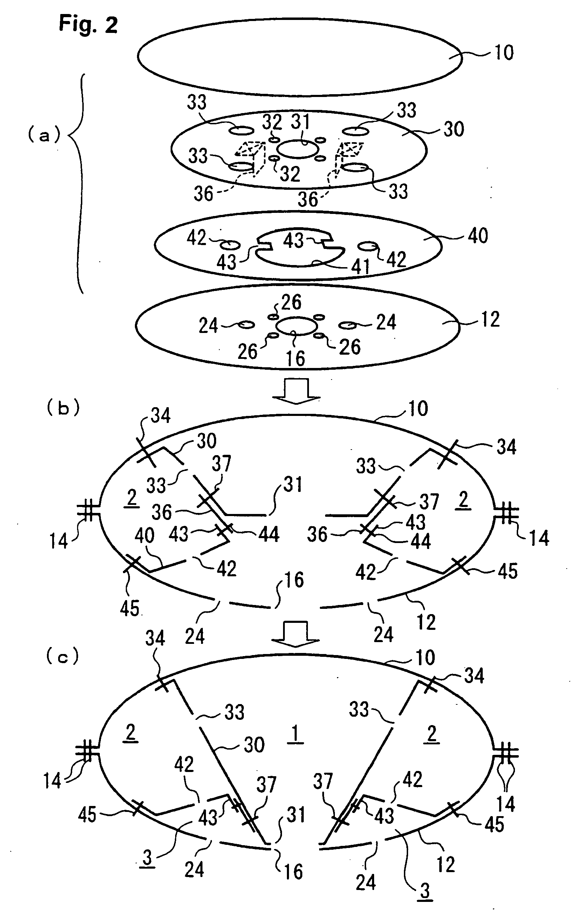

Embodiments of the present invention, partly in line with the claims, will be described with reference to the accompanying drawings. Fig. 1(a) is a longitudinal sectional view of an inflated airbag according to an embodiment, and Fig. 1(b) is a sectional view taken along the line B-B indicated in Fig. 1(a). Fig. 2(a) is an exploded view illustrating the configuration of the airbag, and Figs. 2(b) and 2(c) are sectional views of the same.

The upper part and the lower part of Fig. 1(a) illustrating the airbag are sectional views taken along the lines A₁-A₁ and A₂-A_{2'} respectively, indicated in Fig. 1 (b) .

The airbag has an outer shell construction formed by a round front panel 10 and a round rear panel 12. The front panel 10 and the rear panel 12 are stitched together with a suture thread 14 at the outside periphery thereof so as to form a bag. The rear panel 12 has an opening 16 in the central part thereof for inserting an inflator 18. The rear panel 12 also has a plurality of small holes 26 around the opening 16 for allowing a plurality of bolts 22 to pass therethrough so that an edge of the opening 16 is firmly clamped between a pressure ring 20 and a flange 18a of the inflator 18 with the bolts 22 and a plurality of nuts (not shown) which are securely tightened by the corresponding bolts. In addition, the rear panel 12 has a plurality of vent holes 24 thereon.

The inside of the airbag is partitioned into a first compartment 1, a second compartment 2, and a third compartment 3 by a first inner panel 30 and a second inner panel 40. The first inner panel 30 has an opening 31 in the central part thereof for allowing the inflator 18 to be inserted therein and a plurality of small holes 32 around the opening 31 for allowing the bolts 22 to pass therethrough. Although the first inner panel 30 has four through ports 33 thereon for allowing gas to flow therethrough, the number of through ports 33 is not restrictive.

The inner periphery of the first inner panel 30 is clamped between the flange 18a of the inflator 18 and the pressure ring 20. The outer periphery of the first inner panel 30 is stitched together with the front panel 10 with a suture thread 34.

The first inner panel 30 has base ends of a plurality of lug pieces 36 stitched thereto with a suture thread 37. Although the two lug pieces 36 are provided here, the number of the lug pieces is not restrictive. The lug pieces 36 are provided at the positions between the adjacent through ports 33 or in the vicinities of these positions.

The second inner panel 40 has an opening 41 in the central part thereof and a plurality of through ports 42, at about halfway of the second inner panel 40 in the radial direction of the same, for allowing the gas to flow. The opening 41 has two pieces of tabs 43 extending from the inner radius thereof toward the center of the opening 41. The preferable tabs 43 are formed integrally with the second inner panel 40. The tabs 43 are stitched together with the front ends of the lug pieces 36 with a suture thread 44.

The outer periphery of the first inner panel 30 is stitched to the front panel 10 with the suture thread 34, and the outer periphery of the second inner panel 40 is stitched to the rear panel 12 with a suture thread 45. Next, the lug pieces 36 of the first inner panel 30 and the tabs 43 of the second inner panel 40 are stitched together, and then the outer peripheries of the front panel 10 and the rear panel 12 are stitched together, resulting in a state shown in Fig. 2(b).

Subsequently, as shown in Figs. 1(a), 1(b), and 2(c), the opening 31 at the central part of the first inner panel 30 is coaxially aligned with the opening 16 of the rear panel 12, and the edges of the openings 16 and 31 are clamped by the bolts 22 between the pressure ring 20 and the flange 18a (not shown in Fig. 2(c)) of the inflator 18. Although not shown, the edge of an inflator mounting hole of a retainer for mounting the airbag is also clamped between the pressure ring 20 and the flange 18a.

The first compartment 1 is configured such that it is encircled by the first inner panel 30 and the front panel 10. The front end of the inflator 18 is inserted in the first compartment 1 through the openings 16 and 31. The first compartment 1 extends from the central part of the rear to the central part of the front of this airbag.

The second compartment 2 lies outside the first inner panel 30 and also in front of the second inner panel 40. The second compartment 2 is in communication with the first compartment 1 via the through ports 33.

The third compartment 3 lies outside the first inner panel 30 and also at the back of the second inner panel. The third compartment 3 is in communication with the second compartment 2 via the through ports 42 and with the outside of the airbag via the vent holes 24.

When the inflator 18 starts a gas discharge operation, the gas first inflates the first compartment 1. Then, the gas enters the second compartment 2 via the through port 33 and inflates the second compartment 2. Subsequently, the gas enters the third compartment 3 via the through ports 42 and inflates the third compartment 3.

As described above, when the inflator 18 is activated, the first compartment 1 lying in the central part of the airbag inflates early, and then the second compartment 2 inflates in the sideward direction (in all radial directions) thereof from the front of the first compartment 1. Accordingly, the first and second compartments 1 and 2 allow the airbag to inflate early in the radial direction thereof. Since the total volume of the first and second compartments 1 and 2 is small relative to the total airbag volume, the first and second compartments 1 and 2 inflate substantially early even when an output of the inflator 18 is small. The first inner panel 30 is disposed so as to bridge the front panel 10 and the pressure ring 20, preventing an excessive protrusion of the airbag forwardly (i.e., in a direction toward a passenger) at the early stage of inflation.

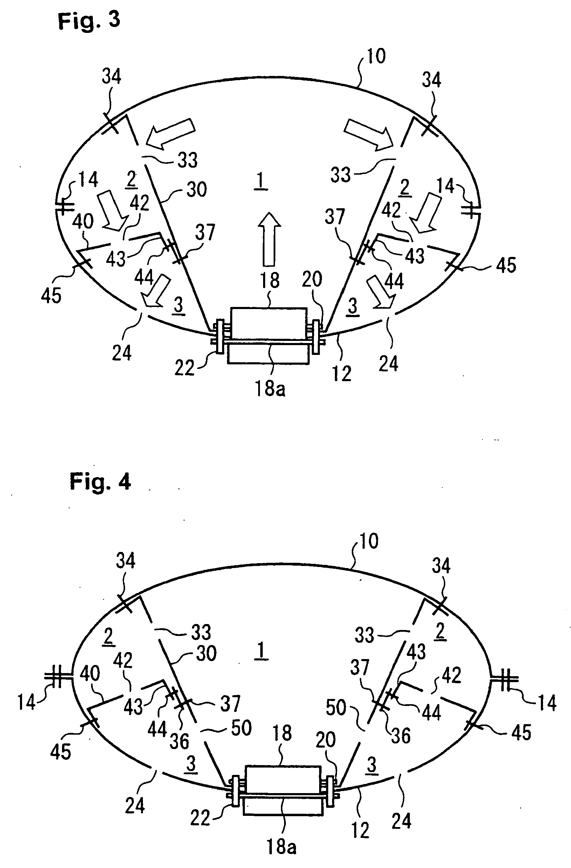

In Figs. 1(a) to 2(c), the front panel 10 and the rear panel 12 have a seam allowance extending out of the airbag. However, as Fig. 3 illustrates a configuration of another airbag, the seam allowance may be arranged inside the airbag.

In such a case, the front panel 10 with which the first inner panel 30 is stitched together and the rear panel 12 with which the second inner panel 40 is stitched together are coaxially aligned, and the outer peripheries thereof are stitched together. Then, the airbag is turned inside out through the opening 16. Subsequently, the lug pieces 36 and the tabs 43 are pulled out of the opening 16 and are stitched together, leading to the airbag having a structure shown in Fig. 3.

When a passenger crashes into any one of the airbags shown in Figs. 1 to 3, a shock is absorbed by discharging the gas through the vent holes 24. However, the vent holes may be omitted when sizes of each panel and each through port, positions to be stitched together, and/or an output of the inflator.18 are properly designed or selected in consideration of a state in which a passenger crashes into the airbag before the third compartment 3 is fully inflated. In such a case, a shock is absorbed by discharging the gas from the second compartment 2 to the third compartment 3.

The through ports 42 of the second inner panel 40 may be omitted in the present invention. In such a case, the gas flows into the third compartment 3 from the second compartment 2 passing through the gap between the inner periphery of the opening 41 of the second inner panel 40 and the first inner panel 30.

According to the present invention, the first inner panel 30 may have a plurality of through ports 50 for allowing the first and third compartments 1 and 3 to directly communicate with each other as shown in Fig. 4. This arrangement allows the third compartment 3 to inflate early.

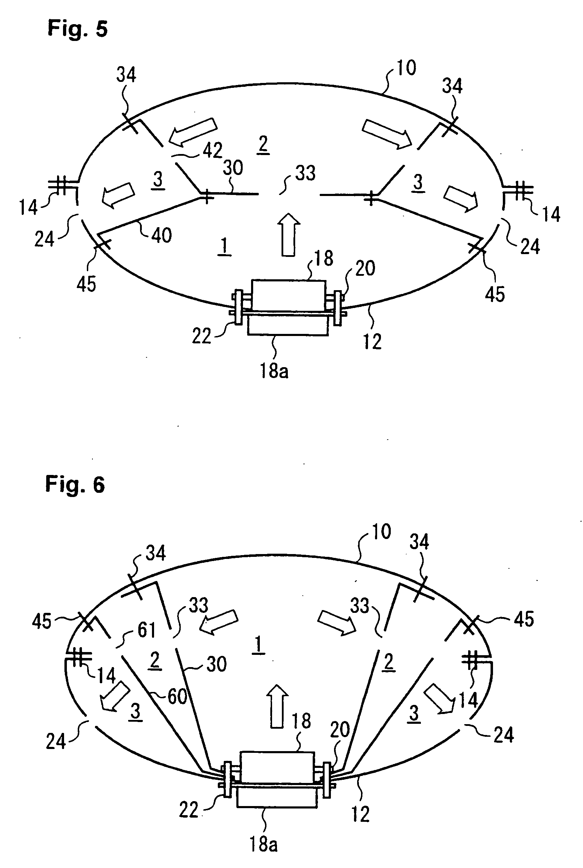

An airbag shown in Fig. 5 and in accordance with the invention is configured such that the first inner panel 30 is not in communication with the pressure ring 20 and is kept away from the rear panel 12. In such an airbag, the first compartment 1 is disposed along the rear panel 12 at the rear of the airbag, the second compartment 2 is disposed along the central part of the front panel 10 at the front of the airbag, and the third compartment 3 is disposed along the outer region of the front panel and in front of the first compartment 1. The through ports 42 for allowing the second and third compartments 2 and 3 to communicate with each other are formed on the first inner panel 30. The second inner panel 40 has no through port. Since the other configuration in Fig. 5 is the same as that of the airbag shown in Figs. 1(a) to 2(c), like reference numerals denote the like parts.

Firstly, in the airbag shown in Fig. 5, when the inflator 18 is activated, the first compartment 1 in the rear part of the airbag inflates early, then the second compartment 2 in the central front part of the airbag inflates, and finally the third compartment 3 in the outer region of the front part of the airbag inflates. In such a case, the first and second compartments 1 and 2 inflate - early, thereby allowing the airbag to inflate so as to receive a passenger early even when an output of the inflator 18 is small.

Although the first and second compartments 1 and 2 are partitioned by the inner peripheral part of the first inner panel 30 in Fig. 5, and the inner peripheral part of the second inner panel 40 is in communication with the first inner panel 30 at halfway thereof in the radial direction, the first and second compartments 1 and 2 may be partitioned by the second inner panel 40 by extending the inside peripheral end of the second inner panel 40 toward the center of the airbag alternatively. In such a case, the inside peripheral end of the first inner panel is in communication with the second inner panel at halfway thereof in the radial direction.

Fig. 6 illustrates another airbag having a configuration in which a second inner panel 60 is disposed outside the first inner panel 30 so as to bridge the pressure ring 20 and the front panel 10. The second inner panel 60 has a plurality of through ports 61 for allowing the second and third compartments 2 and 3 to communicate with each other. The first compartment 1 lies inside the first inner panel 30, while being encircled by the second compartment 2 and being further encircled by the third compartment 3 from the outside of the second compartment 2. Since the other configuration in Fig. 6 is the same as that of the airbag shown in Figs. 1(a) to 2(c), like reference numerals denote the like parts.

Likewise, in this airbag, when the inflator 18 is activated, the first and second compartments 1 and 2 inflate early.

The above embodiments are described by way of examples, and the present invention is applicable to a variety of configurations other than those shown in the drawings. For example, although three compartments are provided in the foregoing embodiments, four or more compartments may be provided.

Also, though the airbags according to the foregoing embodiments have a point symmetrical structure substantially in the circumferential direction thereof with respect to the center point of the opening 16, the present invention is not limited to such a structure. For example, an outer shape of the airbag may be a hexahedron or a polyhedron. Furthermore, for example, the second and third compartments may be disposed only in a part of the airbag in the circumferential direction thereof. Although, as a boding means, stitching together with threads is employed in the forgoing embodiments, an adhesive may be used alternatively. The present invention is also applicable to airbags other than a driver-side airbag.

### [Advantages]

As described above, an airbag, a major part of which inflates early even when an output of the inflator is small, is provided according to the present invention which is defined by the appended claims only.

## Claims

1. An airbag having an opening (16) at the rear (12) thereof for supplying gas and facing a passenger when inflated, comprising:
at least three compartments (1-3) which comprises a first compartment (1), a second compartment (2) adjacent to the first compartment (1), and a third compartment (3) adjacent to the second compartment (2) and which are formed by partitioning the inside of the airbag,
wherein the gas from the first compartment (1) flows into the third compartment (3) via the second compartment (2), wherein the first compartment (1) is disposed only along the rear part (12) of the airbag, and
wherein the second and third compartments (2, 3) are disposed in front of the first compartment (1) when the airbag is inflated,
**characterized in that** when the airbag is inflated, the second compartment (2) is disposed in the central part of the airbag and the third compartment (3) encircles the outer periphery of the second compartment (2).

2. The airbag according to Claim 1, further comprising at least one through port (33, 42, 50, 61) for allowing the first compartment (1) and the third compartment (3) to communicate with each other.

3. The airbag according to Claim 1 or Claim 2, further comprising at least one vent hole (24), wherein the last one of the compartments (1-3) into which the gas flows last communicates with the outside of the airbag through the vent hole (24).

4. The airbag according to Claim 1 or Claim 2, wherein the airbag is configured without a vent hole.

## Patentansprüche

1. Airbag, welcher eine Öffnung (16) auf der Rückseite (12) davon zum Zuführen von Gas besitzt und einem Insassen zugewandt ist, wenn er aufgeblasen wird, umfassend:
mindestens drei Kammern (1-3), welche eine erste Kammer (1), neben der ersten Kammer (1) eine zweite Kammer (2) und neben der zweiten Kammer (2) eine dritte Kammer (3) umfassen, und welche durch Unterteilung des Inneren des Airbags ausgebildet sind,
wobei das Gas von der ersten Kammer (1) über die zweite Kammer (2) in die dritte Kammer (3) strömt, wobei die erste Kammer (1) nur entlang des rückseitigen Teils (12) des Airbags angeordnet ist, und
wobei die zweite und die dritte Kammer (2, 3) vor der ersten Kammer (1) angeordnet sind, wenn der Airbag aufgeblasen wird,
**dadurch gekennzeichnet, dass**, wenn der Airbag aufgeblasen wird, die zweite Kammer in dem zentralen Teil des Airbags angeordnet ist und die dritte Kammer (3) den äußeren Rand der zweiten Kammer (2) einschließt.

2. Airbag nach Anspruch 1, weiterhin umfassend mindestens einen Durchgangsanschluss (33, 42, 50, 61), wodurch die erste Kammer (1) und die dritte Kammer (3) miteinander in Verbindung stehen können.

3. Airbag nach Anspruch 1 oder 2, weiterhin umfassend mindestens ein Lüftungsloch (24), wobei die letzte von den Kammern (1-3), in welche das Gas strömt, zuletzt mit der Außenseite des Airbags durch das Lüftungsloch (24) in Verbindung steht.

4. Airbag nach Anspruch 1 oder 2, wobei der Airbag ohne ein Lüftungsloch ausgestaltet ist.

## Revendications

1. Airbag ou coussin gonflable avec une ouverture (16) à l'arrière (12) de celui-ci destiné à être alimenté en gaz, et à faire face à un passager lorsqu'il est gonflé, comprenant :
au moins trois compartiments (1 à 3) qui comprennent un premier compartiment (1), un deuxième compartiment (2) adjacent au premier compartiment (1), et un troisième compartiment (3) adjacent au deuxième compartiment (2), et qui sont formés en cloisonnant l'intérieur de l'airbag,
dans lequel le gaz provenant du premier compartiment (1) s'écoule dans le troisième compartiment (3) via le deuxième compartiment (2), dans lequel le premier compartiment (1) est disposé seulement le long de la partie arrière (12) de l'airbag, et
dans lequel les deuxième et troisième compartiments (2, 3) sont disposés devant le premier compartiment (1) lorsque l'airbag est gonflé,
**caractérisé en ce que** lorsque l'airbag est gonflé, le deuxième compartiment (2) est disposé dans la partie centrale de l'airbag et le troisième compartiment (3) entoure la périphérie extérieure du deuxième compartiment (2).

2. Airbag selon la revendication 1, comprenant en outre au moins un orifice traversant (33, 42, 50, 61) pour permettre au premier compartiment (1) et au troisième compartiment (3) de communiquer l'un avec l'autre.

3. Airbag selon la revendication 1 ou la revendication 2, comprenant en outre au moins un trou de ventilation (24), dans lequel le dernier des compartiments (1 à 3) dans lequel le gaz s'écoule en dernier communique avec l'extérieur de l'airbag à travers le trou de ventilation (24).

4. Airbag selon la revendication 1 ou 2, dans lequel l'airbag est configuré sans trou de ventilation.
